(19) Europäisches Patentamt
European Patent Office
Office européen des brevets

(11) Veröffentlichungsnummer: **0 001 067**
**B1**

(12) **EUROPÄISCHE PATENTSCHRIFT**

(45) Veröffentlichungstag der Patentschrift: **23.12.81**

(21) Anmeldenummer: **78100712.5**

(22) Anmeldetag: **21.08.78**

(51) Int. Cl.³: **C 08 G 18/84,**
C 08 G 18/08, C 14 C 3/18

# (54) Wasserlösliche kationische Oligourethan-Harze und deren Verwendung zur Behandlung von Blösse oder Leder.

(30) Priorität: **01.09.77 DE 2739378**

(43) Veröffentlichungstag der Anmeldung:
**21.03.79 Patentblatt 79/6**

(45) Bekanntmachung des Hinweises auf die Patenterteilung:
**23.12.81 Patentblatt 81/51**

(84) Benannte Vertragsstaaten:
**BE DE FR GB**

(56) Entgegenhaltungen:
**FR - A - 1 513 215**
**FR - A - 2 303 034**
**FR - A - 2 325 668**
**US - A - 3 674 415**

(73) Patentinhaber: **BAYER AG**
**Zentralbereich Patente, Marken und Lizenzen**
**D-5090 Leverkusen 1, Bayerwerk (DE)**

(72) Erfinder: **Träubel, Harro, Dr.**
**Dresdener Strasse 14**
**D-5090 Leverkusen (DE)**
Erfinder: **Dieterich, Dieter, Dr.**
**Ludwig-Girtler-Strasse 1**
**D-5090 Leverkusen (DE)**
Erfinder: **Heinze, Helga**
**Kaiser-Wilhelm-Ring 15**
**D-5000 Köln 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 001 067 B1

# Wasserlösliche kationische Oligourethan-Harze und deren Verwendung zur Behandlung von Blöße oder Leder

Die vorliegende Erfindung betrifft wasserlösliche, Methylolgruppen enthaltende, kationische hydrophile Oligourethane und deren Verwendung zur Gerbung, Vorgerbung oder Nachgerbung von Blöße bzw. vorgegerbtem Leder, sowie als Färberei-Hilfsmittel.

In der Deutschen Offenlegungsschrift 2 504 081 wird ein Verfahren zum Gerben oder Nachgerben von Blöße bzw. Leder vorgeschlagen, welches dadurch gekennzeichnet ist, daß Blöße oder Leder mit einer wäßrigen Flotte behandelt werden, die

(a) hydrophile Oligourethane, welche gegebenenfalls methyloliert sind, mit einem Molekulargewicht von 300—20 000 und gegebenenfalls

(b) Formaldehyd oder eine Formaldehyd abspaltende Substanz enthält.

Die dort beschriebenen Oligourethane sind im allgemeinen auf Basis von wasserlöslichen Polyäthern mit einem Molekulargewicht unter 500 aufgebaut und sind vorzugsweise frei von ionischen Gruppen. Es werden in der DOS 2 504 081 jedoch auch Oligourethane erwähnt, welche Sulfonatgruppen aufweisen und auf der Grundlage hydrophober, nicht wasserlöslicher Polyäther aufgebaut sind und dispergierbare Oligourethane ergeben. Es wird in diesem Zusammenhang ausdrücklich darauf hingewiesen, daß der Einbau ionischer oder in ionische Gruppen umwandelbarer Gruppierungen

(z. B. auch $-\overset{|\oplus}{\underset{|}{N}}-$ -Gruppierungen)

in das Oligourethan-Harz dann in Betracht zu ziehen ist, wenn beim Aufbau des Oligourethans hydrophobe Polyhydroxylverbindungen eingesetzt werden. Ferner sind zur Herstellung der Oligourethane auch Kombinationen hydrophober mit nichtionisch hydrophilen Polyhydroxylverbindungen, z. B. Oligoäthylenglykole möglich. Wie dem Fachmann bekannt ist, ermöglicht der Einbau ionischer Zentren die Überführung auch solcher Oligourethane in Wasser, welche ohne das ionische Zentrum nicht wasserlöslich und auch nicht in Wasser dispergierbar sind.

In Weiterentwicklung des bekannten Verfahrens wurde nunmehr überraschend gefunden, daß wäßrige Lösungen von solchen Oligourethan-Harzen in ihrem gerberischen und färberischen Verhalten stark verbessert sind, welche zusätzlich zu hydrophilen Polyäthylenglykolpolyäthern kationische Zentren enthalten, die in an sich bekannter Weise durch Reaktion eines tertiären Stickstoffatoms mit einem Quaternierungsmittel und/oder Säure erhalten worden sind, wobei als besonders vorteilhaft gefunden wurde, das Quaternierungsmittel und/oder die Säure in unterschüssigen Mengen, bezogen auf tertiären Stickstoff, einzusetzen, so daß der pH-Wert der resultierenden wäßrigen Lösung des kationischen Oligourethans zwischen 5 und 10, vorzugsweise zwischen 7 und 9, liegt.

Während in dem vorgenannten Stand der Technik hydrophile Segmente zur Wasserlöslichkeit bzw. hydrophil-hydrophobe Segmente und/oder ionisch modifizierte hydrophobe Segmente zur Wasserdispergierbarkeit eingeführt worden sind, werden nun zur Entwicklung besonders vorteilhafter Gerbungsmittel überraschenderweise solche Oligopolyurethane benutzt, welche an sich aus ihrem Aufbau aus relativ kurzkettigen Polyäthylenglykolen heraus bereits voll wasserlöslich sind, trotzdem in synergistischer Weise weiterhin eine bestimmte Menge an tertiären Amingruppen eingebaut enthalten, wovon jedoch ein bestimmter Anteil in die quarternäre Form oder in die Ammoniumsalzform überführt sein muß. Es hat sich ferner gezeigt, daß für Gerbstoffe gut geeignete Oligourethane kationisch (nicht anionisch) modifiziert sein sollen.

Kationische Produkte auf Basis hydrophober Polyole (entsprechend DE—OS 2 504 081) zeigen nicht den für die erfindungsgemäßen wasserlöslichen Produkte typischen Weichgerbeffekt.

In der US—PS 3 674 415 werden Umsetzungsprodukte aus Phenol-Mannichbasen und NCO-Präpolymeren beschrieben. Da dem Fachmann bekannt ist, daß phenolische Gruppen Gerbwirkung besitzen, war es durchaus nicht naheliegend, die erfindungsgemäßen Produkte zu entwickeln, welche Gerbstoffe ohne den bekannterweise gerbenden Phenol-Mannichbasen-Gruppen darstellen.

Nach der FR—PS 2 325 668 sollen an sich hydrophobe Materialien selbstdispergierend gemacht werden. Diese dispergierbaren Polyurethane enthalten maximal 20 Gew.-% an Äthylenoxid-Einheiten. Diese Produkte zur Herstellung von Oberflächenüberzügen, u. a. auch für Leder, sind filmbildend, während die erfindungsgemäßen wasserlöslichen Oligourethane als Gerbstoffe nicht filmbildend sind.

Die erfindungsgemäßen wäßrigen Oligourethanlösungen haben gegenüber den Lösungen gemäß Stand der Technik folgende Vorteile:

1. Sie sind trotz ihres kationischen Charakters hervorragend elektrostabil.
2. Der anionische Charakter nachgegerbter Chromleder wird überkompensiert.
3. Die Produkte wirken weichgerbend.
4. Die Produkte sind in der Vorgerbung einsetzbar, ohne die anschließende Chromgerbung negativ zu beeinflussen.
5. Die kationischen Oligourethanlösungen verbessern die Auszehrung von anionischen Farbstoffen und ergeben eine brilliantere und intensivere Färbung, ohne die Egalität der Färbung

nachteilig zu beeinflussen.

Gegenstand der vorliegenden Erfindung sind somit wasserlösliche, Methylolgruppen aufweisende, von NCO-Gruppen freie Oligourethane mit einem Molekulargewicht zwischen 600 und 5 000 auf Basis von

a) Polyäthylenglykoläthern vom Molekulargewicht 400 bis 1 500,
b) Polyisocyanaten, gegebenenfalls
c) gegenüber Isocyanaten monofuncktionellen oder polyfunktionellen Verbindungen, vorzugsweise Alkoholen, mit einem Molekulargewicht unter 300, sowie
d) Formaldehyd,

welche dadurch gekennzeichnet sind, daß der Anteil der Komponente a) im Oligourethan 40 bis 90 Gew.-%, vorzugsweise 60—80 Gew.-%, beträgt und daß die Komponenten a) und/oder c) insbesamt zwischen 20 mVal und 200 mVal, vorzugsweise 30 bis 100 mVal, pro 100 g Oligourethanfeststoff an tertiären Stickstoffatomen aufweisen, von denen 20 bis 95%, vorzugsweise 60—90 %, durch Behandlung mit Alkylierungsmitteln und/oder Säuren in quartären Ammoniumstickstoff bzw. in die Ammoniumsalzform übergeführt wurden.

Gegenstand der Erfindung ist auch ein Verfahren zum Gerben bzw. Nachgerben von Blöße oder Leder, welches dadurch gekennzeichnet ist, daß Blöße oder Leder mit einer wäßrigen Lösung der erfindungsgemäßen Oligourethane behandelt werden, deren pH-Wert zwischen 5 und 10, vorzugsweise zwischen 7 und 9, besonders bevorzugt zwischen 7 und 8, liegt.

Als Polyäthylenglykoläther kommen bei der Herstellung der erfindungsgemäßen Oligourethanharze Polyäther mit einer durchschnittlichen Funktionalität zwischen 1, 8 und 4, vorzugsweise zwischen 2 und 3, in Betracht, welche ein Molekulargewicht von 400 bis 1 500 aufweisen. Diese können in an sich bekannter Weise durch Anlagerung von Äthylenoxid an Starterkomponenten mit reaktionsfähigen Wasserstoff-Atomen, wie Alkohole, Amine oder Wasser, hergestellt werden. In untergeordneten Mengen können gegebenenfalls auch andere Epoxide, z.B. Propylenoxid oder Butylenoxid mitverwendet werden, jedoch soll deren Anteil in jedem Fall unter 20%, vorzugsweise unter 10%, betragen. Ganz besonders bevorzugt sind reine Polyäthylenglykolpolyäther, welche ein Durchschnittsmolekulargewicht von 500 bis 1 200 aufweisen und in Wasser klar löslich sind.

Besonders bevorzugt sind auch Polyäthylenglykol-Polyäther, welche auf Verbindungen wie Ammoniak, primären Aminen oder Aminoalkoholen gestartet wurden und infolgedessen tertiäre Aminogruppen enthalten. In diesem Falle kann auf die Mitverwendung niedermolekularer tertiärer Amine als Reaktionskomponenten verzichtet werden.

Als Polyisocyanate kommen im Prinzip beliebige aliphatische, cycloaliphatische, araliphatische, aromatische und heterocyclische Polyisocyanate in Betracht, wie sie beispielsweise in der deutschen Offenlegungsschrift 2 504 081 aufgeführt sind. Bevorzugt werden wegen ihrer Lichtechtheit aliphatische oder cycloaliphatische Polyisocyanate, insbesondere 1,6-Diisocyanatohexan, 1,4-Diisocyanatobutan sowie 1-Isocyanato-3,3,5-trimethyl-5-isocyanatomethylcyclohexan eingesetzt. Ganz besonders bevorzugt ist 1,6-Diisocyanatohexan. Zur Herstellung von dunkel oder in gelbbraunen Tönen eingefärbten Ledern können auch Produkte auf Basis aromatischer Isocyanate Verwendung finden; hierfür bevorzugt eingesetzte aromatische Polyisocyanate sind 2,4-Diisocyanatotoluol, 2,6-Diisocyanatotoluol sowie deren Isomerengemische, 2,4'-Diisocyanatodiphenylmethan bzw. 4,4'-Diisocyanatodiphenylmethan und deren Isomerengemische.

Unter gegenüber Isocyanaten monofunktionellen oder polyfunktionellen niedermolekularen Verbindungen, welche zum Aufbau der erfindungsgemäßen Oligourethane in einer Menge von weniger als 30 Gew.-%, vorzugsweise weniger als 15 Gew.-%, bezogen auf Oligourethan, eingesetzt werden können, kommen neben den an sich bekannten ein- und mehrwertigen Alkoholen wie z.B. Äthylenglykol, Diäthylenglykol, 1,2- und 1,3-Propylenglykol, Dipropylenglykol, 1,4- und 2,3-Butandiol, Glycerin, Trimethylolpropan und 1,2,4-Hexantriol vor allem auch tertiäre Stickstoffatome aufweisende Verbindungen in Betracht. Als solche eigner sich insbesondere basische Mono- und Dialkohole, z.B. Dimethylaminoäthanol, Dimethylaminopropanol, Diäthylaminoäthanol, Diäthylaminopropanol, N-Hydroxyäthylpyrrolidin, N-Hydroxyäthylpiperidin, N-Methyldiäthanolamin, N-Äthyldiäthanolamin und N-Methyldiisopropanolamin. Weitere geeignete Aminoalkohole sind beispielsweise in der deutschen Offenlegungsschrift 1 770 068 auf Seite 18 aufgeführt.

Als weitere gegenüber Isocyanaten reaktive Verbindungen können auch ditertiäre Diamine in Kombination mit einem Quaternierungsmittel eingesetzt werden, welches neben der quarternierend wirkenden Gruppe mindestens ein zerewitinoffaktives H-Atom aufweist, beispielsweise Bromäthanol, so daß während der Polyisocyanatadditionsreaktion simultan in situ auch eine Quaternierungspolyaddition abläuft. Ein derartiges Verfahren zur Herstellung ionischer Isocyanatpolyadditionsprodukte wird z.B. in der DE—AS 1 495 770 (US-Patent 3 535 274) beschrieben.

Geeignete ditertiäre Diamine (die selbstverständlich auch durch nachträgliche Umsetzung mit quaternierend wirkenden Gruppen des Oligourethans in das Oligourethanmolekül eingebaut werden können) sind z.B. N,N'-Tetramethyl-äthylendiamin, N,N'-Tetramethyl-hexamethylendiamin, Pentamethyl-diäthylentriamin, Pentamethyl-dipropylentriamin, N,N'-Dimethylpiperazin, N,N'-Bis-(3-dimethylaminopropyl)-harnstoff und N,N'-Bis-(3-dimethylaminopropyl)-oxamid.

Die Mitverwendung der genannten tertiären Aminoalkohole bzw. der ditertiären Diamine beim Aufbau der erfindungsgemäßen Oligourethane ist jedoch nur dann zwingend erforderlich, wenn der verwendete Polyäthylenglykol-Polyäther von tertiären Aminogruppen frei ist. Selbstverständlich ist es auch möglich, daß sowohl durch den Polyäthylenglykol-Polyäther auch auch z.B. durch tertiäre Aminoalkohole quaternierbare Stickstoffatome eingeführt werden.

Die Gesamtmenge an tertiärem bzw. quaternärem, in Ammoniumsalzform vorliegendem Stickstoff im Oligourethan-Harz sollte mindestens 0,3 Gew.-% und bis zu 2, 8 Gew.-% (20 bis 200 mVal tert. N pro 100 g Oligourethan) betragen, bevorzugt ist eine Menge von 0,35 bis 1,8 Gew.-% (25 bis 129 mVal tert. N pro 100 g Oligourethan).

Vorzugsweise werden bei der Herstellung der Oligourethane gemäß vorliegender Erfindung $C_1$—$C_{20}$-Monoalkohole als Kettenabbrecher mitverwendet. Sofern schon ein basischer Monoalkohol zwecks Einführung von tertiären Stickstoffatomen Verwendung findet, wie z.B. Dimethylaminoäthanol, kann diese Verbindung auch die Funktion eines Kettenabbrechers übernehmen, so daß weitere Monoalkohole nicht eingesetzt zu werden brauchen. Nichtbasische $C_1$—$C_{20}$-Monoalkohole sind z.B. Methanol, Äthanol, Propanol, Isopropanol, 1-Butanol, Glykolmonomethyläther, Glykolmonoäthyläther, Glycid, 3-Hydroxymethyl-3-äthyl-oxetan, 2-Chloräthanol, 2-Bromäthanol, Trichloräthanol, Diäthylenglykolmonomethyläther,

2-Butanol, 2-Methyl-1-propanol, Pentanol, 3-Methyl-1-butanol, 2,2-Dimethylpropanol, Hexanol, 2-Äthyl-1-butanol, Octanol, 2-Äthylhexanol, Decanol, Dodecanol, Tetradecanol, Hexadecanol, Octadecanol, Fettalkohol-Gemische, wie sie unter der Bezeichnung "Lorol®" oder "Alfol®" im Handel sind 2-Isopropoxyäthanol. 2-Butoxyäthanol, 2-(2-Butoxyäthoxy)-äthanol, 2-Äthylthioäthanol, Cyclohexanol, Methylcyclohexanol, Hydroxymethylcyclohexan, Trimethylcyclohexanol und 4-tert.-Butylcyclohexanol. Bevorzugt sind $C_1$—$C_6$-Monoalkohole, insbesondere Methanol und Äthanol.

Als Quaternierungsmittel eignen sich grundsätzlich die bekannten mono- und bifunktionellen Alkylierungsmittel, wie sie beispielsweise in der DE—OS 1 770 068 auf Seite 20 und in der DE—OS 1 300 275 auf Seite 2—3 aufgeführt sind. Besonders bevorzugt sind Dimethylsulfat, Diäthylsulfat, Epichlorhydrin, Chloracetamid, Chloressigsäuremethylester, Chloressigsäureäthylester, p-Toluolsulfosäuremethylester, Bromäthanol, Äthylenglykol-mono-benzolsulfonat, Dichlorbuten und Dibrombutan. Ganz besonders bevorzugt sind von Chlor- und Brom-Atomen freie Quaternierungsmittel. Die eingesetzte Menge an Alkylierungsmittel soll höchstens 95%, bevorzugt 60 bis 90%, der zur vollständigen Quaternierung erforderlichen Menge betragen.

Ganz besonders einfach und daher erfindungsgemäß bevorzugt ist die Salzbildung der im Oligourethan anwesenden tert. Aminogruppen mit anorganischen oder organischen Säuren. Hierfür geeignete Säuren sind den deutschen Patentschriften 1 178 586 und 1 179 363 zu entnehmen. Bevorzugte anorganische Säuren sind Schwefelsäure, phosphorige Säure und Phosphorsäure, deren Menge so gewählt wird, daß der pH-Wert der wäßrigen Lösung des kationischen Oligourethans nicht unter 5, bevorzugt nicht unter 7, liegt.

Dies ist der Fall, wenn die molare Menge dieser Säuren nicht mehr als etwa 50% jener der vorhandenen tertiären Stickstoff-Atome beträgt.

Zu den bevorzugten organischen Säuren gehören Sulfonsäuren von aromatischen Verbindungen, z.B. die technisch leicht zugänglichen Naphthalin-, Ditolyläther- und Terphenylsulfonsäuren und deren Kondensationsprodukte mit Formaldehyd und Dioxydiphenylsulfon. Auch andere als synthetische Gerbstoffe bekannte Säuren kommen in diesem Zusammenhang in Frage.

Eine weitere Gruppe bevorzugter Säuren sind organische Carbonsäuren mit 1 bis 6 C-Atomen, z.B. Essigsäure, Milchsäure, Glykolsäure, Oxalsäure, Bernsteinsäure, Glutarsäure, Adipinsäure, Weinsäure, Zitronensäure oder deren technische Gemische. Auch im Falle der Verwendung dieser Säuren soll der pH-Wert der wäßrigen Oligourethan-Lösungen nicht unter 5, bevorzugt nicht unter 7 betragen. Infolge der stark puffernden Wirkung der mit diesen Säuren erhaltenen Produkte kann die Menge dieser Säuren in einem weiten Bereich schwanken und beispielsweise auch über dem Äquivalenzpunkt liegen. In jedem Fall enthalten die kationischen Oligourethan-Lösungen anteilig noch freie tert. Aminogruppen, entweder durch unvollständige Quaternierung oder Salzbildung oder auch durch partielle Hydrolyse der mit Säuren enthaltenen Salze.

Gemäß einer besonderen Ausführungsform der vorliegenden Erfindung werdem beim Aufbau der Oligourethane neben den bisher genannten Ausgangsverbindungen auch Alkohole mit Carbonsäure- bzw. Sulfonsäuregruppen oder deren Salze mitverwendet. Die molare Menge der auf diese Weise eingeführten anionischen Gruppen sollte jedoch kleiner sein als jene der tertiären, nicht quaternierten Stickstoffatome. Beispiele für derartige Verbindungen sind Hydroxymethan- und Hydroxyäthansulfonsäure und deren Salze; Addukte von schwefliger Säure an ungesättigte Alkohole wie z.B. Allylalkohol, Methallylalkohol, Buten(2)-diol(1,4), Buten(1)-diol(3,4), Maleinsäure-bis-glykolester oder Alkoxylierungsprodukte dieser Alkohole, Glykolsäure, Milchsäure, Dimethylolpropionsäure und Dimethylolbuttersäure sowie deren Salze.

Beim Aufbau der Oligourethane kann man z.B. in einem ersten Schritt den Polyäthylenglykoläther mit dem Polyisocyanat zur Reaktion bringen und das so erhaltene Voraddukt mit den gegebenenfalls mitverwendeten niedermolekularen gegenüber Isocyanaten reaktiven Verbindungen umsetzen. Es ist

jedoch bevorzugt, alle Ausgangskomponenten (gegebenenfalls auch schon das Quaternierungsmittel) in einem one-shot-Verfahren miteinander umzusetzen. Gegebenenfalls kann dabei ein inertes Lösungsmittel mitverwendet werden; vorzugsweise wird jedoch in der Schmelze gearbeitet.

Beim Aufbau der Oligourethane aus ausschließlich bi- oder höherfunktionellen Komponenten wird, um das gewünschte niedere Molekulargewicht zu erreichen, ein NCO/OH-Verhältnis von ca. 0,4 bis 0,8, vorzugsweise 0,5 bis 0,7, eingehalten. Werden monofunktionelle Kettenabbrecher mitverwendet, so beträgt das NCO/OH-Verhältnis ca. 0,5 bis 1,0, vorzugsweise 0,6 bis 0,9. Bevorzugt sind Oligourethane, die wenigstens teilweise endständige OH-Gruppen besitzen.

Die so erhaltenen von Isocyanatgruppen freien Oligourethane werden mit Hilfe von Formaldehyd, Paraformaldehyd oder anderen Formaldehyd abspaltenden Mitteln in Gegenwart von Wasser methyloliert, wobei die molare Menge an eingesetztem Formaldehyd 20—120%, bevorzugt 30—70%, jener der anwesenden Urethan-Gruppen beträgt. Ein größerer Überschuß an Formaldehyd ist selbstverständlich möglich, bringt jedoch keine Vorteile. Eine zweckmäßige Ausführungsform der Methylolierung besteht darin, bei Raumtemperatur oder auch bei Temperaturen zwischen 30 und 80°C eine wäßrige Formaldehyd-Lösung in das basische Oligourethan, das schon quaterniert oder neutralisiert sein kann, einzurühren und anschließend das Produkt mit Wasser zu verdünnen. Man kann jedoch auch zur fertigen wäßrigen Lösung des Oligourethans als letzten Reaktionsschritt Formaldehyd zugeben. Die Methylolierung wird begünstigt und der Gehalt an freiem Formaldehyd vermindert, wenn die wäßrige Lösung der Reaktanten einige Stunden bei 30—90°C gerührt wird.

Die Oligourethane werden erfindungsgemäß im allgemeinen in Form 0,1 bis 50%iger, vorzugsweise 1 bis 20%iger wäßriger Lösungen als Gerbflotte eingesetzt.

Die Behandlung des Leders bzw. der Bloße mit den erfindungsgemäßen Gerbflotten kann in allen an sich bekannten Apparaturen erfolgen, beispielsweise in Gerbfässern, Gerbmischern, den Gerbeapparaten der Firma Hagspiel (BRD) sowie in Maschinen des Typs Staromat® und Coretan®. Das erfindungsgemäße Verfahren wird im allgemeinen bei Temperaturen zwischen 10 und 90°C, vorzugsweise 30 bis 60°C; ausgeführt.

Farbstoffe ziehen auf Leder, die mit den erfindungsgemäßen Produkten behandelt wurden, besonders gleichmäßig auf. Die Auszehrung von anionischen Farbstoffen in der Flotte ist ausgezeichnet. Es werden brillante und intensive Färbungen erhalten.

Die erfindungsgemäß gegerbten Leder sind nach allen bekannten Zuricht-Methoden zurichtbar. Die Leder sind zügig, hautfreundlich, atmungsaktiv, weich, weiß und bei Verwendung aliphatischer Oligourethane lichtbeständig. Wegen des weißen Untergrundes sind hochbrilliante Einfärbungen des Leders möglich.

In der Summe der Eigenschaften sind die mit den kationischen Oligourethanen gemäß vorliegender Erfindung gegerbten und eingefärbten Leder solchen überlegen, die mit vergleichbaren Oligourethanen ohne kationische Gruppen und ohne die speziellen hoch hydrophilen Polyäther hergestellt wurden.

Die folgenden Beispiele erläutern die vorliegende Erfindung. Wenn nicht anders vermerkt, sind Mengenangaben als Gewichtsteile bzw. Gewichtsprozente zu verstehen.

Beispiele 1 bis 7

Das folgende Gemisch hydroxyfunktioneller Verbindungen wird bei Raumtemperatur vorgelegt.

492 g (0,8 Mol) eines Polyoxyäthylenglykols vom Molekulargewicht 615
23,8 g (0,2 Mol) N-Methyl-diäthanolamin
19,2 g (0,6 Mol) Methanol

Hierzu gibt man die in der Tabelle angegebene Menge an 1,6-Diisocyanatohexan und erwärmt, falls erforderlich, auf 80°C, bis keine freien NCO-Gruppen mehr nachzuweisen sind. Anschließend gibt man eine Lösung von 3,3 g roher technischer Glutarsäure in 200 g Wasser und 65 g einer 37%igen wäßrigen Formaldehyd-Lösung (0,8 Mol) zu und verdünnt anschließend mit Wasser auf einen Feststoffgehalt (einschließlich Formaldehyd) von 55% (25% $N^{\oplus}$).

| Beispiel | 1 | 2 | 3 | 4 | 5 | 6 | 7 |
|---|---|---|---|---|---|---|---|
| 1,6-Diisocyanatohexan (g) | 117,6 | 134,4 | 151,2 | 168,0 | 184,8 | 201,6 | 215,0 |
| (Mol) | 0,7 | 0,8 | 0,9 | 1,0 | 1,1 | 1,2 | 1,28 |
| pH | 7,6 | 7,8 | 7,3 | 7,3 | 7,3 | 7,5 | 7,6 |
| mVal tert.N Pro 100 g Oligourethan | 30,6 | 29,9 | 29,2 | 28,5 | 27,8 | 27,2 | 26,7 |

Beispiel 8

Es wird wie in Beispiel 2 verfahren, jedoch werden anstelle von Methanol 53,4 g (0,6 Mol) Dimethylaminoäthanol eingesetzt. Als Neutralisationskomponente werden 46,2 g rohe technische Glutarsäure verwendet. Die dünnflüssige, klare wäßrige Lösung hat einen pH-Wert von 7,5 (119,5 mVal tert.N/100 g; 88% $N^{\oplus}$).

Beispiel 9

Analog Beispiel 1 werden folgende Reaktionskomponenten umgesetzt:

615 g (1 Mol) eines Polyoxyäthylenglykols vom MG 615
53,4 g (0,6 Mol) Dimethylaminoäthanol
134,4 g (0,8 Mol) 1,6-Diisocyanatohexan
36,2 g rohe technische Glutarsäure
65 g einer 37%igen wäßrigen Formaldehyd-Lösung

Die Schmelze (74.7 mVal tert. N/100 g; 91.4% $N^{\oplus}$ wird mit Wasser auf 54% Feststoffgehalt verdünnt (pH = 7,0).

Beispiel 10

Analog Beispiel 1 werden folgende Reaktionskomponenten umgesetzt:

492 g (0,8 Mol) eines Polyoxyäthylenglykols vom MG 615
23,8 g (0,2 Mol) N-Methyldiäthanolamin
30 g (0,3 Mol) Cyclohexanol
9,6 g (0,3 Mol) Methanol
134,4 g (0,8 Mol) 1,6-Diisocyanatohexan
3,3 g (technische Glutarsäure
65 g einer wäßrigen 37%igen Formaldehydlösung

Die Schmelze (29 mVal tert. N/100 g; 25% $N^{\oplus}$) wird mit Wasser auf 54% Feststoffgehalt verdünnt (pH = 7,3).

Beispiel 11

Es wird gemäß Beispiel 9 verfahren, anstelle der Glutarsäure wird jedoch Kohlensäure zur Neutralisation eingesetzt, indem die fertige wäßrige Lösung mit 50 g festem Kohlendioxid (Trockeneis) versetzt wird. Anschließend wird 2 Stunden lang ein Strom von gasförmigem Kohledioxid durch die Lösung geleitet. pH = 7,7.

Beispiel 12

Beispiel 2 wird wiederholt und eine 80%ige wäßrige Lösung des Produkts hergestellt (pH = 7,6).

Beispiel 13

Analog Beispiel 1 werden folgende Reaktionskomponenten umgesetzt:

349 g (0,6 Mol) eines auf Triäthanolamin gestarteten Polyäthylenoxids (OH-Zahl 289)
19,2 g (0,6 Mol) Methanol
134,4 g (0,8 Mol) 1,6-Diisocyanatohexan
11,6 g wäßrige 37%ige Formaldehyd-Lösung

Die Schmelze (119.5 mVal tert. N/100 g) wird mit Wasser auf 54% Feststoffgehalt verdünnt (pH = 7,4).

Beispiele 14 bis 18

Beispiel 2 wird mit unterschiedlichen Formaldehyd-Mengen wiederholt:

| Beispiel | 2 | 14 | 15 | 16 | 17 | 18 |
|---|---|---|---|---|---|---|
| Formaldehyd (Mol) | 0,8 | 0,7 | 0,6 | 0,5 | 0,4 | 0,3 |
| (g) | 24 | 21 | 18 | 15 | 12 | 9 |
| %Formaldehyd | 3,5 | 3,0 | 2,6 | 2,2 | 1,75 | 1,3 |
| pH | 7,5 | 7,5 | 7,5 | 7,4 | — | — |

Beipsiel 19

Es wird wie in Beispiel 15 verfahren und die Schmelze mit Wasser auf einen Feststoffgehalt von 80% verdünnt (pH = 8).

Beispiel 20

Es wird wie in Beispiel 2 verfahren, jedoch wird anstelle von 19,2 g Methanol als Kettenabbrecher ein Gemisch aus 54 g (0,2 Mol) Stearylalkohol und 12,8 g (0,4 Mol) Methanol eingesetzt. Beim Verdünnen der Schmelze auf einen Feststoffgehalt von 54% wird eine hochviskose Paste erhalten, die sich mit Wasser zu einem Hydrosol verdünnen läßt (pH = 7,3).

Beispiel 21

Es wird wie in Beispiel 2 verfahren, jedoch werden anstelle von 3,3 g Glutarsäure 2,2 g 85%ige ortho-Phosphorsäure zur Neutralisation eingesetzt (pH = 7,5).

Beispiel 22

Beispiel 2 wird unter Verwendung von 12,5 g 40%iger meta-Phosphorsäure wiederholt (pH = 7,5).

Beispiel 23

Beispiel 2 wird unter Verwendung von 34 g 5%iger Schwefelsäure wiederholt (pH = 7,5).

Beispiel 24

Beispiel 2 wird ohne Mitverwendung von Glutarsäure wiederholt; 90% der tert. Aminogruppen werden, nachdem die Schmelze frei von NCO-Gruppen ist, mit 16,8 g Chloracetamid (0,18 Mol) 3 Stunden bei 80°C quaterniert. Anschließend wird wie üblich mit Formaldehyd versetzt und mit Wasser verdünnt (pH = 8,3).

Beispiel 25

Folgendes Gemisch hydroxyfunktioneller Verbindungen wird bei 40—50°C vorgelegt:

492 g (0,8 Mol) eines Polyoxyäthylenglykols vom MG 615
41 g (0,1 Mol) des Addukts von 3,8 Mol Propylenoxid an 1 Mol 1,4-Dihydroxybutan-2-sulfonsaures Natrium
11,9 g (0,1 Mol) N-Methyl-diäthanolamin
19,2 g (0,6 Mol) Methanol.

Hierzu gibt man 134,4 g (0,8 Mol) 1,6-Diisocyanatohexan und läßt ca. 30 Minuten bei 80—82°C reagieren, bis die Schmelze frei von NCO-Gruppen ist (IR-Spektrum). Dann werden 10 g (0,08 Mol) Dimethylsulfat zugetropft, un 80% der tert. Aminogruppen zu quaternieren. Nach weiteren 30 Minuten Rühren bei 80°C werden 605 g Wasser, die 24 g Formaldehyd enthalten, eingerührt. Man erhält eine 54%ige wäßrige Lösung des Oligourethans (pH = 7,1).

Beispiel 26

Es wird analog Beispiel 24 verfahren, jedoch mit 22,7 g Dimethylsulfat als Quaternierungsmittel anstelle des Chloracetamids gearbeitet. (pH = 6,9).

Vergleichsversuch 1

Es wird gemäß Beispiel 2 verfahren, jedoch ohne anschließende Teilneutralisation der tert. Aminogruppen. Die 54%ige wäßrige Lösung hat einen pH-Wert von 9.

Vergleichsversuch 2

Es wird gemäß Beispiel 2 verfahren, jedoch unter Zusatz von 36 g (0,6 Mol) Harnstoff anstelle des Methanols. pH = 7,4.

Beispiel 27

In einer Gerbflasche werden ca. 200 g konservierte Kalbsblöße in 200 g Wasser mit 10% (bezogen auf Trockensubstanz) eines gemäß Beispiel 21 hergestellten Produktes 24 Stunden lang bei Raumtemperatur gegerbt. Das erhaltene Leder hatte eine Schrumpfungstemperatur von 85°C (gegenüber von 63°C bei nicht behandelter Blöße).
Das gegerbte Leder trocknete weiß auf.

Analog wurden die Produkte aus folgenden Beispielen geprüft und folgende Schrumpfungstemperaturen aufgefunden:

| Beispiel | % Trockensubstanz auf Blößengewicht | Schrumpfungstemperatur (°C) |
|---|---|---|
| 22 | 10 | 86 |
| 23 | 10 | 88 |
| 24 | 10 | 87 |
| 25 | 10 | 88 |
| 26 | 10 | 87 |
| 1 | 10 | 86 |
| 2 | 10 | 87 |
| 3 | 10 | 86 |
| 4 | 10 | 85 |
| 5 | 10 | 84 |
| 6 | 10 | 85 |
| 7 | 10 | 85 |
| 8 | 10 | 84 |
| 9 | 10 | 84 |
| 10 | 10 | 87 |
| 11 | 10 | 84 |
| 12 | 10 | 87 |
| 13 | 10 | 89 |
| 14 | 10<br>20 | 85<br>90 |
| 15 | 10<br>20 | 85<br>89 |
| 16 | 10<br>20 | 84<br>89 |
| 17 | 10<br>20 | 82<br>88 |
| 18 | 10<br>20 | 80<br>87 |
| 19 | 10 | 86 |
| 20 | 10 | 85 |
| Vergleichsversuch 2 | 10 | 75 |

Beispiel 28

A: Eine in üblicher Weise entkälkte Rindhälfte wurde mit 1% eines Produktes gemäß Beispiel 15 und 1% eines 90%igen Fettungsmittels auf Basis Chlorparaffin versetzt und 1 Stunde mit 30% Flotte im

Faß laufen lassen. Anschließend wurde in üblicher Weise im gleichen Bad gepickelt und chromgegerbt.

B: Die korrespondierende Hälfte wurde in analoger Weise, aber ohne das erfindungsgemäße Produkt bearbeitet.

Die Hälfte gemäß Versuch A war weicher und narbenfester als die gemäß Versuch B.

Während des Versuches A wurde nach Zugabe der Pickelsubstanzen auf Auftreten von Dichlordimethyläther (DCMA) geprüft. DCMA war gaschromatografisch/massenspektroskopisch nicht nachweisbar. Nachweisgrenze der Methode: 100 ppb.

Beispiel 29

Analog Beispiel 28 wurde vergleichend gegen Glutardialdehyd vorgegerbt und fertiggestellt.

Ergebnis:
Mit erfindungsgemäßem Produkt
Flächenrendement: + 4%
Reißfestigkeit 207 (mit Glutardialdehyd 170) $kg/cm^2$
Weiterreißfestigkeit 37 (gegen 30) kg/cm
Stichausreißfestigkeit 69 (gegen 59) kg/cm

Beispiel 30

A: Gefalztes Chromrindleder wurde im Faß in üblicher Weise neutralisiert, gewaschen und bei 40°C mit 3% eines Produktes gemäß Beispiel 2 versetzt und 30 Minuten laufen lassen. Im gleichen Bad wurde mit 1% eines sauer-substantiven Lederfarbstoffes gefärbt und wie üblich gefettet und abgesäuert.

B: Eine Vergleichshälfte wurde mit analogen Mengen eines handelsüblichen Gerbereihilfsmittels auf Eiweiß-Hydrolysat-Basis gearbeitet.

Das im Falle A erhaltene Leder war farbtiefer als im Falle B. Im Dyeometer wurden folgende $\Theta$-Werte gefunden:

A: 100
B: 88

Beispiel 30 A wurde mit den Produkten der Beispiel 1—7, 9 und 24 wiederholt. Es wurden folgende $\Theta$-Wert erhalten:

| Beispiel | $\Theta$ |
|---|---|
| 1 | 88 |
| 3 | 90 |
| 4 | 88 |
| 5 | 81 |
| 6 | 82 |
| 7 | 83 |
| 9 | 89 |
| 24 | 102 |

Das im Vergleichsversuch 1 hergestellte Produkt zeigt ein vergleichbar gutes Ausziehen des Färbebades. Die Egalität der Färbung war deutlich schlechter als die der nach Beispiel 30 A bearbeiteten Leder.

Beispiel 31

A: Gefalztes Chromrindleder wird mit 6% eines Produktes nach Beispiel 9 versetzt, im gleichen Bad auf pH 4,5 neutralisiert und wie üblich gefärbt, gefettet und nachgegerbt.

B: Vergleichbare Hälften wurden analog mit einem chromhaltigen Nachgerbstoff bearbeitet.

Bei A war -gegenüber B- kein Unterschied in Farbtiefe, Brillanz und Egalität, was im Hinblick auf die Umweltbelastung mit chromhaltigen Abwässern ein Vorteil ist.

**Patentansprüche**

1. Wasserlösliche, Methylolgruppen aufweisende, von NCO-Gruppen-freie Oligourethane mit einem Molekulargewicht zwischen 600 und 5000 auf Basis von

a) Polyäthylenglykoläthern vom Molekulargewicht 400 bis 1500,

b) Polyisocyanaten, gegebenenfalls

c) gegenüber Isocyanaten monofunktionellen oder polyfunktionellen Verbindungen mit einem Molekulargewicht unter 300 sowie

d) Formaldehyd,

dadurch gekennzeichnet, daß der Anteil der Komponente a) im Oligourethan 40 bis 90 Gew.-% beträgt und daß die Komponenten a) und/oder c) insgesamt zwischen 20 und 200 mVal pro 100 g Oligourethanfeststoff an tertiären Stickstoffatomen aufweisen, von denen 20 bis 95% durch Behandlung mit Alkylierungsmitteln und/oder Säuren in quartären Ammoniumstickstoff bzw. in die Ammoniumsalzform übergeführt wurden.

2. Oligourethane nach Anspruch 1, dadurch gekennzeichnet, daß der Anteil der Komponente a) im Oligourethan 60 bis 80 Gew.-% beträgt.

3. Oligourethane nach Anspruch 1 oder 2, dadurch gekennzeichnet, daß die Komponenten a) und/oder c) insgesamt zwischen 30 und 100 mVal an tertiären Stickstoffatomen pro 100 g Oligourethanfeststoff aufweisen, von denen 60 bis 90% durch Behandlung mit Alkylierungsmitteln und/oder Säuren in quartären Ammoniumstickstoff bzw. in die Ammoniumsalzform übergeführt wurden.

4. Oligourethane nach Anspruch 1 bis 3, dadurch gekennzeichnet, daß die tertiären Stickstoffatome durch Behandlung mit Schwefelsäure, phosphoriger Säure, Phosphorsäure, organischen Carbonsäuren oder organischen Sulfonsäuren teilweise in die Ammoniumsalzform übergeführt wurden.

5. Oligourethane nach Anspruch 1 bis 4, dadurch gekennzeichnet, daß sie Sulfonat- und/oder Carboxylatgruppen enthalten.

6. Oligourethane nach Anspruch 1 bis 5, dadurch gekennzeichnet, daß als Komponente b) 1,6-Diisocyanatohexan eingesetzt wurde.

7. Verfahren zum Gerben bzw. Nachgerben von Blöße oder Leder mit wäßrigen Flotten, welche Oligourethane enthalten, dadurch gekennzeichnet, daß Blöße oder Leder mit einer wäßrigen Lösung von Oligourethanen nach Anspruch 1 bis 6 behandelt werden, deren pH-Wert zwischen 5 und 10 liegt.

8. Verfahren nach Anspruch 7, dadurch gekennzeichnet, daß der pH-Wert der wäßrigen Flotte zwischen 7 und 8 liegt.

**Revendications**

1. Oligo-uréthannes hydrosolubles porteurs de groupes méthylol, dépourvus de groupes NCO, de poids moléculaire compris entre 600 et 5000, à base:

a) d'éthers polyéthylèneglycoliques d'un poids moléculaire de 400 à 1500,

b) de polyisocyanates, le cas échéant

c) de composés monofonctionnels ou polyfonctionnels vis-à-vis des isocyanates, d'un poids moléculaire inférieur à 300, ainsi que

d) de formaldéhyde,

caractérisés en ce que la proportion de composant a) dans l'oligo-uréthanne va de 40 à 90% en poids et en ce que les composants a) et/ou c) présentent au total entre 20 et 200 mVal par 100 g de matière solide d'oligo-uréthanne, d'atomes d'azote tertiaires dont 20 à 95% ont été transformés en azote d'ammonium quaternaire ou en sel d'ammonium par traitement avec des agents alkylants et/ou des acides.

2. Oligo-uréthannes suivant la revendication 1, caractérisés en ce que la proportion du composant a) dans l'oligo-uréthanne s'élève à 60—80% en poids.

3. Oligo-uréthannes suivant la revendication 1 ou 2, caractérisés en ce que les composants a) et/ou c) présentent au total 30 à 100 mVal d'atomes d'azote tertiaires par 100 g de matière solide d'oligo-uréthanne, dont 60 à 90% ont été transformés en azote d'ammonium quaternaire ou en sel d'ammonium par traitement avec des agents alkylants et/ou des acides.

4. Oligo-uréthannes suivant les revendications 1 à 3, caractérisés en ce que les atomes d'azote tertiaires ont été transformés partiellement en sel d'ammonium par traitement avec l'acide sulfurique, l'acide phosphoreux, l'acide phosphorique, des acides carboxyliques organiques ou des acides sulfoniques organiques.

5. Oligo-uréthannes suivant les revendications 1 à 4, caractérisés en ce qu'ils contiennent des groupes sulfonate et/ou carboxylate.

6. Oligo-uréthannes suivant les revendications 1 à 5, caractérisés en ce que le 1,6-diisocyanatohexane a été utilisé comme composant b).

7. Procédé de tannage ou de retannage de cuiret ou de cuir avec des bains aqueux qui contiennent des oligo-uréthannes, caractérisé en ce que le cuiret ou le cuir est traité avec une solution aqueuse d'oligo-uréthannes suivant les revendications 1 à 6, dont le pH a une valeur de 5 à 10.

8. Procédé suivant la revendication 7, caractérisé en ce que le pH du bain aqueux a une valeur comprise entre 7 et 8.

**Claims**

1. Water soluble oligourethanes which contain methylol groups and are free from isocyanate groups and have a molecular weight of from 600 to 5,000, based on

a) polyethylene glycol ethers having a molecular weight of from 400 to 1,500,

b) polyisocyanates, optionally

c) compounds having a molecular weight below 300 which are mono-functional or polyfunctional in the reaction thereof with isocyanates, and

d) formaldehyde,

characterised in that the proportion of component a) in the oligourethane is from 40 to 90%, by weight, and in that components a) and/or c) together contain a total of from 20 to 200 mVal of tertiary nitrogen atoms per 100 g of oligourethane solids content, from 20 to 95% of which nitrogen atoms have been converted into quaternary ammonium nitrogen or into ammonium salt from by treatment with alkylating agents and/or acids.

2. Oligourethanes according to Claim 1, characterised in that the proportion of component a) in the oligourethane is from 60 to 80%, by weight.

3. Oligourethanes according to Claim 1 or 2, characterised in that components a) and/or c) contain a total of from 30 to 100 mVal of tertiary nitrogen atoms per 100 g of oligourethane solids content, from 60 to 90% of which nitrogen atoms have been converted into quaternary ammonium nitrogen or into ammonium salt from by treatment with alkylating agents and/or acids.

4. Oligourethanes according to Claims 1 to 3, characterised in that the tertiary nitrogen atoms have been partially converted into ammonium salt form by treatment with sulphuric acid, phosphorous acid, phosphoric acid, organic carboxylic acids or organic sulphonic acids.

5. Oligourethanes according to Claims 1 to 4, characterised in that they contain sulphonate and/or carboxylate groups.

6. Oligourethanes according to Claims 1 to 5, characterised in that the compound used as component b) is 1,6-diisocyanatohexane.

7. Process for tanning or re-tanning pelts or leather with aqueous liquors which contain oligourethanes, characterised in that pelts or leather are treated with an aqueous solution of oligourethanes according to Claims 1 to 6, the pH of which is from 5 to 10.

8. Process according to Claim 7, characterised in that the pH of the aqueous liquor is from 7 to 8.